# EUROPEAN PATENT APPLICATION

(11) **EP 4 757 368 A1**
(43) Date of publication of application: **10.06.2026**
(21) Application number: 24218204.6
(22) Date of filing: 06.12.2024
(51) Int. Cl.: H04W 12/04, H04W 12/069

(54) **A METHOD FOR INITIALIZING A HARDWARE TOKEN FOR SHARING OF A DIGITAL KEY IN A DIGITAL ACCESS SYSTEM FOR A VEHICLE, A SYSTEM FOR CARRYING OUT THIS METHOD AND A HARDWARE TOKEN**

(71) Applicant: Bayerische Motoren Werke Aktiengesellschaft, 80809 München (DE)
(72) Inventor: Hippler, Marco, 81541 München (DE); Fink, Matthias, 81541 München (DE)

(57) **Abstract**

The invention relates to a method for initializing a hardware token for sharing of a digital key in a digital access system for a vehicle, comprising providing on the hardware token a hardware token management applet, a hardware token instance CA comprising a hardware token instance CA certificate, wherein the instance CA certificate is issued by a device CA. The invention also relates to a system for carrying out this method and to a hardware token.

## Description

The present invention is directed to a method for initializing a hardware token for sharing of a digital key in a digital access system for a vehicle, comprising providing on the hardware token a hardware token management applet, a hardware token instance CA comprising a hardware token instance CA certificate, wherein the instance CA certificate is issued by a device CA. The invention also relates to a system for carrying out this method and to a hardware token. The digital key may be a CCC (Car Connectivity Consortium) digital key.

The management and exchange of digital keys in modern digital access systems present significant technical challenges, particularly in security-critical applications. Such systems are facing the challenge of integrating various technologies to reliably and securely control access to vehicle functions.

Presently, digital access systems comprise so-called smart devices like smartphones, smartwatches, tablets or the like and a software that carry a digital key embedded in a secure storage on the smart device. The smart devices offer interfaces from the secure storage to the smartphone operating system and from the smartphone operating system to other applications running on the smartphone (e.g. a vehicle OEM's app). Further, the digital access system comprise at least vehicle, allowing carriers of a digital key to operate certain vehicle functionalities. Finally, the digital access system comprises backend systems, interconnecting smart devices and vehicles allowing to share and manage digital keys and offer additional services.

Crucial to these systems are the integrity and authentication of the digital keys, the access and management of the key endpoints, and the flexibility of the system to accommodate different use cases. In particular, the following problems must be addressed to ensure a robust and user-friendly solution for digital key management in vehicle access systems.

Rental and other fleet managing companies are facing the challenge that sharing digital keys to smartphones may be impractical, or too expensive. For example, the work area may have a low financial budget and/or smart devices may be prone to theft. Another scenario may be a secure parking space where smart devices cannot be left in vehicles in contrast to conventional key fobs. Also, scenarios such as vehicle processing for cleaning, refueling, or repairs, which normally involve multiple personnel may be difficult to handle with smart devices, typically bound to individual users and dependent on inter-device key sharing. Also, a use case exists for companies, such as dealerships or repair shops, may avoid providing digital key-enabled smart devices to employees due to cost, theft risk, or logistical issues, since mart phones are probably too expensive, may get stolen or are not easily transferred form one employee to another.

Another issue concerns the secure and flexible sharing of digital keys. In particular, the policies of the vehicle manufacturer must be taken into account to ensure that keys are only shared with authorized devices and under the correct conditions. The sharing process should be designed to support both private and fleet or service releases without compromising security.

Lastly, the issue of secure communication between devices and vehicles arises. During the key transfer process, it is crucial that communication can be reliably resumed in the event of a connection loss. It must be ensured that the integrity and authenticity of the transferred data remain intact even if an interruption occurs during the process.

Summarizing, a user of a digital key device may share the digital key for controlling the one or more vehicle functions with another device which then itself becomes a digital key device. The present document is directed at the technical problems mentioned above and in particular also to providing a safe, flexible and/or efficient key sharing procedure for sharing a digital key with another digital key entity.

The technical problem is solved by each one or the independent claims. Preferred examples are specified in the dependent claims.

According to an aspect, a method for initializing a hardware token for sharing of a digital key in a digital access system for a vehicle is described, comprising providing on the hardware token a hardware token management applet, a hardware token instance CA comprising a hardware token instance CA certificate, wherein the instance CA certificate is issued by a device CA. The term "access" shall cover all forms of access to vehicle functions, e.g. locking/unlocking doors or flaps, drive mode of the vehicle by unlocking the immobilizer, normally by an immobilizer token, etc.

This method provides security and flexibility by enabling communication between the hardware token and multiple vehicle OEMs through a proxy, ensuring compatibility and reducing the need for different tokens for each manufacturer. The proxy enables interoperability between OEMs by acting as an intermediary and providing a shared authentication mechanism across different OEM systems. Cross-signing the certificate ensures that the hardware token can be recognized and trusted by multiple vehicle OEMs or a global root CA. This approach enables seamless interoperability across different vehicle brands, improving the token's usability and scalability.

According to a preferred embodiment, the hardware token instance CA certificate is cross-signed by a Vehicle OEM CA, in the case of a hardware token specific to a Vehicle OEM, and/or a global CA, in the case of a universally usable hardware token, and/or a proxy CA acting as a proxy for several vehicle OEMs.

In this context, it is preferred when the proxy is a system, software, or other hardware token that acts as an intermediary between the hardware token and multiple vehicle OEM systems. The use of a proxy system enables secure communication between the hardware token and various OEMs without the need for a unique configuration for each OEM.

According to a further preferred embodiment in this context, the proxy is responsible for managing certificates for multiple OEMs. The proxy's ability to manage multiple certificates streamlines the process of authenticating the hardware token across different systems. It centralizes certificate management, improving security by ensuring that all keys and credentials are securely stored and up to date.

Alternatively and/or additionally, the proxy system may store and manage authentication certificates for different OEMs.

According to a further embodiment, the hardware token comprises secret and parameters for deriving a secret of a password.

According to a further aspect, a system for carrying out the above mentioned methods is described, the system comprising securely sharing a digital vehicle access key, the system comprising a server and/or a backend system and a hardware token.

According to a further aspect, a hardware token for above the system is described.

It is important to highlight that the methods and systems, including their preferred embodiments, described in this patent application can be utilized either independently or together with other methods and systems presented in this document. Additionally, all aspects of the methods and systems described here can be freely combined. Specifically, the features of the claims may be combined in any order or manner.

The invention is now described in the following in an exemplary manner with reference to the accompanying drawings, wherein
Fig. 1 shows in a schematic view an embodiment of a digital key access system for a vehicle;
Fig. 2 shows in a schematic view an embodiment of a hardware token;
Fig. 3 shows an embodiment of a process for the initial preparation of a hardware token,
Fig. 4 shows an embodiment of a process for initiating a sharing process on the sharing side;
Fig. 5 shows an embodiment of a process for endpoint creation on the hardware token;
Fig. 6 shows an embodiment of a process for key tracking and finalizing of the sharing;
Fig. 7 shows an embodiment of a process for binding the sharing of a hardware token;
Fig. 8 shows in an embodiment a process for handling connection losses in key sharing.

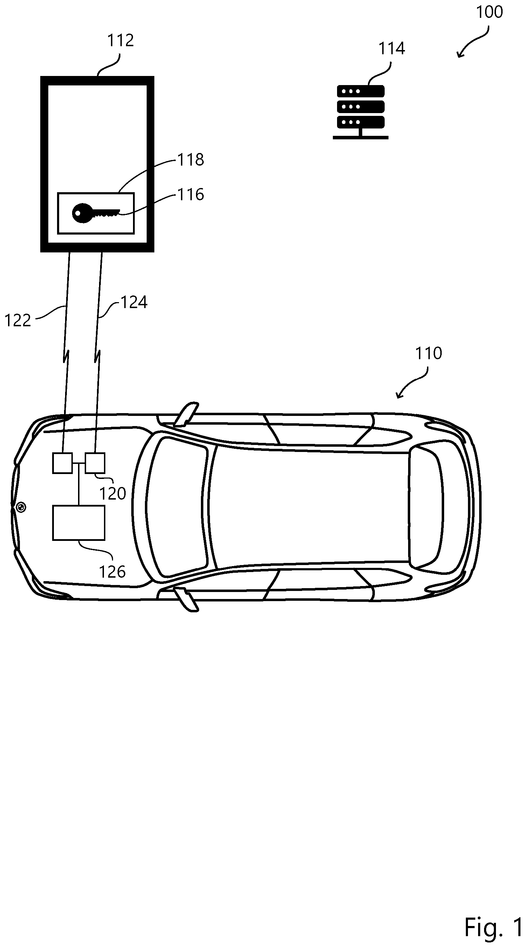

Fig.1 shows an embodiment of a digital key access system 100 for a vehicle 110. The system 100 comprises besides the vehicle 110 usually, but not necessarily, a smart device 112 and a server 114. The smart device 112 may be a portable electronic device, such as a smartphone, a tablet PC, a wearable smart device (such as a smart watch), etc. A digital key 116 may be stored on the smart device 112, in particular in a protected memory section of the portable electronic device. The protected memory section may be a so-called secure element 118 according to the CCC standard. In general, this does not necessarily have to be a secure element and may use a different technology, The smart device 112 typically comprises an integrated power supply, such as a battery, to allow the smart device 112 to be operated in an autonomous manner.

The smart device 112 may communicate with a communication unit 120 of the vehicle 110 via one or more wireless communication links 122, 124. Different communication links 122, 124 may be used for different purposes. In particular, a Bluetooth Low Energy (BLE) communication link 122 and/or a Near Field Communication (NFC) communication link 124 may be used to provide a short-range communication between the device 112 and the vehicle 110. For establishing the NFC communication link 124, the device 112 may be held in close proximity (e.g. in a distance of less than 10 cm) from the communication unit 120 of the vehicle 110.

A control unit 126 of the vehicle 110 may be configured to control at least one vehicle function of the vehicle 110 in dependence of the communication between the smart device 112 and the vehicle 110. In this context, the digital key 116 of the smart device 112 may be verified, in particular authenticated. Furthermore, subject to authentication, one or more vehicle functions may be controlled, notably in dependence of the distance between the smart device 112 and the vehicle 110; the location of the smart device 112 relative to the vehicle 110; and/or a control command sent by the smart device 112 to the vehicle 110 via a communication link 122, 124.

In the example system 100, a BLE communication link 122 may be established between the smart device 112 and the vehicle 110, once the distance between the smart device 112 and the vehicle 110 is equal to or less than a first distance threshold. Once the BLE communication link 122 has been established, the smart device 112 may be authenticated with the vehicle 110 using the digital key 116 of the smart device 112. Subject to authentication of the smart device 112, the smart device 112 may be enabled to send one or more control commands via the communication link 122 for controlling one or more vehicle functions.

As already discussed, using a smart device 112 as a carrier for the digital key 116 is not always the best option. There are various use cases - as already mentioned - in which a hardware token is preferred. Rental and other companies that manage fleets can use hardware tokens, e.g. key cards, to share vehicle keys to employees or customers.

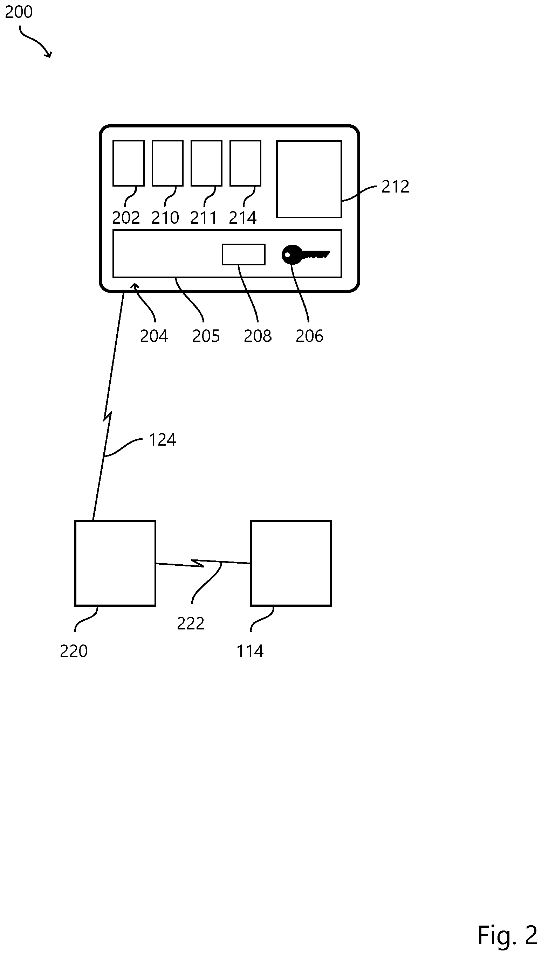

Fig. 2 shows as an embodiment of a hardware token 200 having a communication module 202, notably an NFC communication module, and a secure storage area 204, notably a secure element 205, wherein the storage area 204 is configured to store a shared digital key 206 and/or an attestation 208 for the shared digital key 206. Furthermore, hardware token 200 may comprise an applet 210, e.g. a hardware token management applet 210, which provides a set of commands for interacting with the hardware token 200, notably with the secure element 205 of the hardware token 200. The hardware token management applet 210 and the digital key applet 211 may be executed on a processor of the hardware token 200. In general, all functionality, i.e. management and use related function, may also be encapsulated in one single applet.

In the illustrated embodiment the hardware token 200 is a key card. The key card 200 must be provided with electrical energy from an external power source, e.g. from a surrounding magnetic field. In addition, the hardware token 200 may have a code 212, in particular a machine-readable code such as a QR code, printed on the surface of the hardware token 200. The code 212 may be indicative of a password which may be used for establishing a secure communication channel with the hardware token 200.

A digital key device, e.g. the smart device 112, acting as an owner and/or sharer device, may interact with a hardware token 200 via a communication link 124, in particular via an NFC communication link. Hence, the smart device 112 may be used as an NFC card reader for the hardware token 200. The communication link 124 may be used to manage, e.g. to share or create, to terminate and/or to delete, the shared digital key 206 on the hardware token 200.

The hardware token 200 is typically provided by a hardware token provider, wherein the hardware token provider operates a hardware token manufacturer server 220. The hardware token manufacturer server 220 and the hardware token 200 may interact via a communication link 124, e.g. via an NFC communication link, e.g. to install software on the hardware token 200, such as the hardware token management applet 210, and/or to provide public key infrastructure (PKI) data to the hardware token 200. The PKI data of the hardware token manufacturer server 220 is typically independent from the PKI data used by the vehicle server 114. The hardware token manufacturer server 220 and the vehicle server 114 may be configured to communicate with one another via a communication link 222.

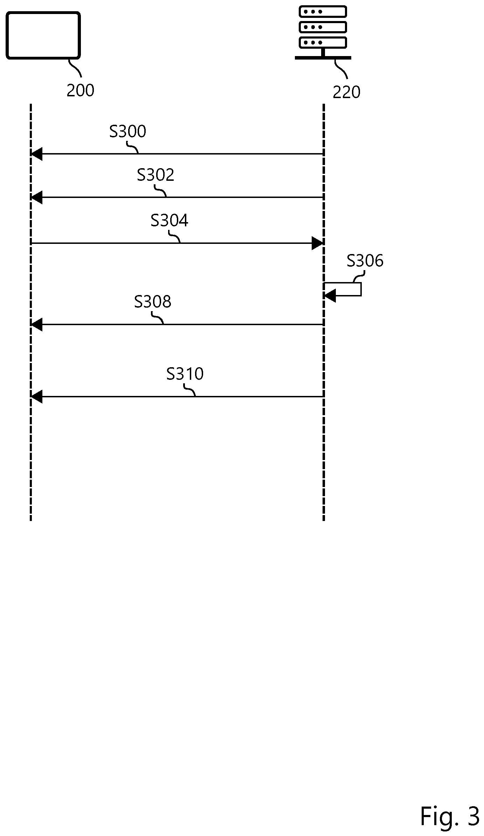

Fig. 3 illustrates an embodiment of a process for initial preparation of a hardware token 200. The process forms the so-called phase 0 of a process for sharing a digital key 206 to a hardware token 200. In phase 0 the hardware token 200 is prepared for secure communication and operation within the digital vehicle access system. This initialization is typically completed by the hardware token manufacturer prior to shipping, ensuring that the hardware token 200 is fully configured before any sharing operations begin.

First, the hardware token management applet 210 for key learning and management and the digital key applet 211 for key use as well as configuration data for a secure external communication channel with the hardware token management applet 210, e.g. SPAKE2+ are deployed onto the hardware token 200 (S300). As already mentioned, the functionality of both applets 210, 211 may be integrated into a single applet. Once the hardware token management applet 210 and the digital key applet 211 are installed, a hardware token instance CA 214 is created on the hardware token 200 (S302), generating a unique key pair that will be used for authentication and encrypted communication. The hardware token instance CA key pair is generated and stored directly on the hardware token 200, along with the corresponding hardware token instance CA certificate.

Following this, the hardware token 200 generates a certificate signing request for the hardware token instance CA certificate and sends it to the hardware token manufacturer server 220 for verification (S304). The hardware token manufacturer server 220 reviews this request and signs the hardware token instance CA certificate, confirming the authenticity and integrity of the hardware token instance CA (S306). The hardware token instance CA certificate may be cross-signed by either a Vehicle OEM CA for tokens specific to a Vehicle OEM, a global hardware token root CA for global tokens, or a proxy hardware token, which acts as an intermediary for multiple vehicle OEMs.

After signing, the hardware token instance CA certificate is provisioned on the hardware token 200 (S308). Finally, the hardware token OEM CA certificate is also provisioned on the hardware token 200, enabling trusted communication with multiple vehicle OEMs (S310).

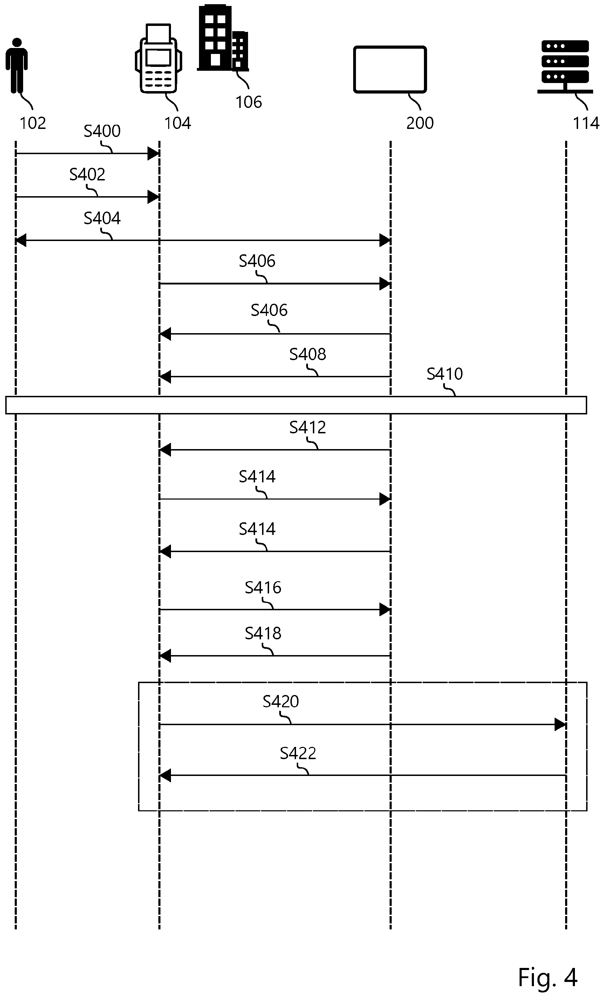

After the initial preparation of the hardware token 200, a digital key 206 can be shared with the hardware token 200. To this end, the sharing process needs to be initiated. This is done in phase 1 - see Fig. 4.

In Fig. 4, initiating the sharing a digital key to a hardware token 200 is illustrated as phase 1. The method begins with an employee 102 of a fleet management or a service provider 106 selecting a vehicle 110 for which access is being granted (S400). The employee 102 then initiates the "Sharing to Token" process on a terminal 104 (S402), which acts as a gateway between the hardware token 200, a Fleet Management Server (FMS) or Service Provider Server (SPS), and any associated backend systems Following this, the hardware token 200 is placed on the interface of the terminal 104 to establish a connection (S404).

Once connected, the terminal sends a SELECT command to activate the hardware token management applet 210 on the hardware token 200, preparing it for the sharing operation (S406). The hardware token 200 responds with a SELECT response message indicating readiness (S408). If an endpoint already exists on the hardware token 200 and the hardware token is designed to hold only one endpoint, the existing endpoint must first be revoked and the process will end here. An endpoint revocation flow will need to be initiated before proceeding (S410). Alternatively, if the hardware token is ready to accept a new digital key, it will respond with a SELECT response confirming its compatibility for the new key sharing operation (S412).

The terminal then requests the hardware token instance CA certificate from the hardware token 200, along with additional certificates from the certificate chain, to identify the hardware token 200 (S414). In response, the hardware token 200 provides a VIEW response indicating the length of the requested certificate data, allowing the terminal 104 to prepare for the data transfer (S414).

The terminal 104 issues a READ BUFFER command to download the certificate data as specified in the previous response, which includes the hardware token instance CA certificate and other relevant certificates required for authentication (S416). The hardware token 200 responds with the requested certificate data, which includes all necessary certificates for verification (S418).

The system may then optionally verify the compatibility of the hardware token 200 using proprietary methods similar to those used in a private flow (S420). The terminal may send a PreShare request, which includes the hardware token sharing data based on the hardware token Instance CA certificate and a vehicle identifier, to validate the hardware token 200 compatibility (S422).

The PreShare request is an optional step in the sharing process. It may be used to obtain an individual policy from the vehicle OEM 114 regarding endpoint deletion. This policy provides information on whether and how an endpoint should be deleted in case of an error during the finalization of the token sharing process. This information may be helpful to ensure that the policy of the vehicle OEM 114 is respected in any endpoint creation or deletion actions.

In particular in fleet scenarios, the password needed for secure communication, e.g. SPAKE2+, can either be provided in a scannable format, such as a QR code, or sent by a backend entity.

For fleet or service provider processes, the secure communication parameters may be pre-exchanged between the hardware token manufacturer (OEM) and the fleet or service provider, facilitating secure sharing.

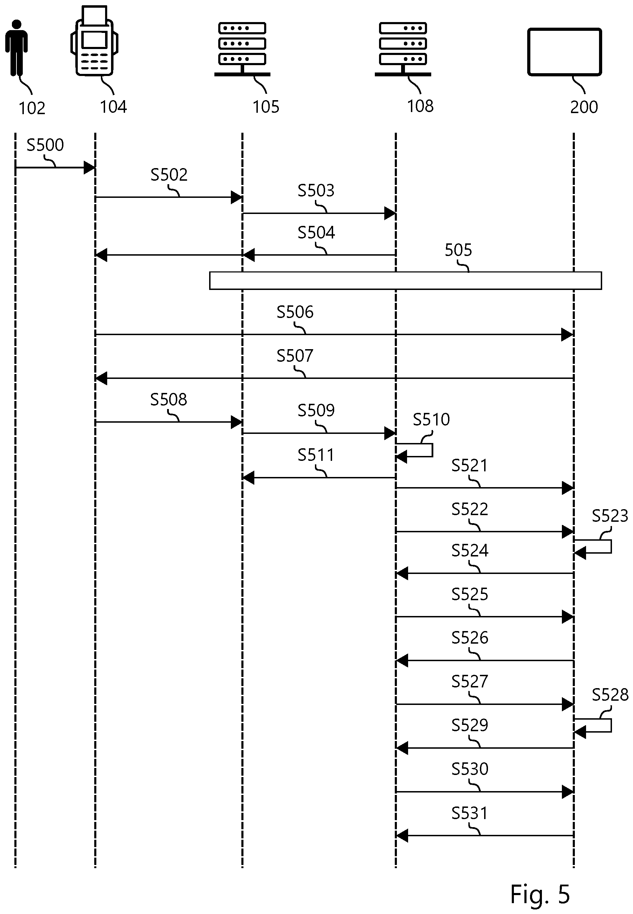

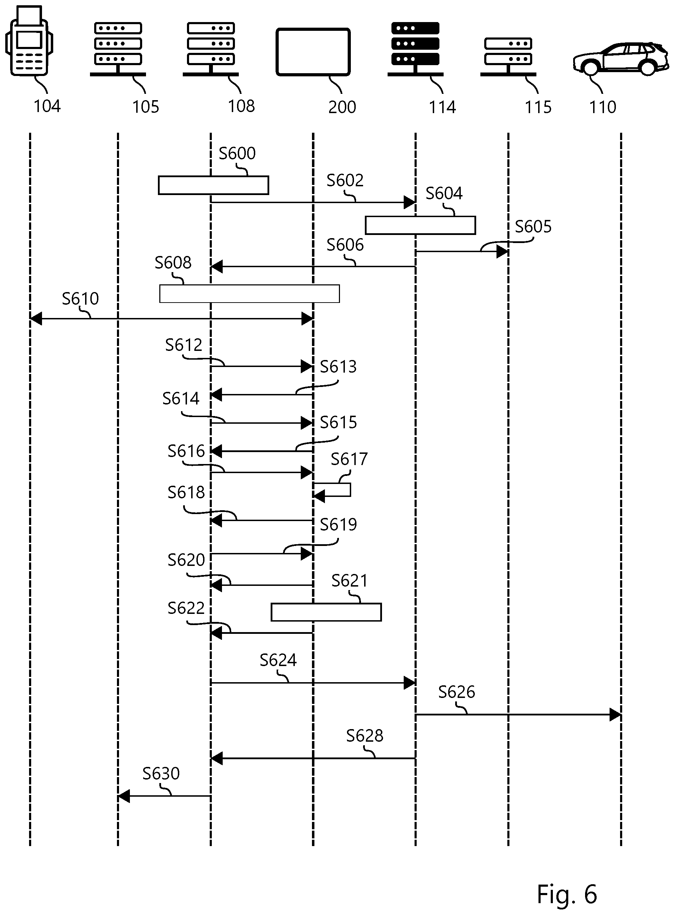

In Fig. 5, phase 2 is illustrated. The process of phase 2 focuses on establishing a secure communication channel, e.g. SPAKE2+-based, between the hardware token 200 and the Server-Based Owner/Friend Device (SBxD) 108, creating a new endpoint on the hardware token 200, and generating an encryption key and its attestation for future secure data exchanges. This newly created key is used for a secure transfer of an optional immobilizer token into the confidential mailbox (see step S600 below in Fig.6).

The process begins with the fleet management employee 102 or service employee 102 initiating the sharing process by selecting the option to request sharing on the respective device (S500). This request is forwarded to the fleet management/service provider application or terminal 104 (S502). The fleet management/service provider server 105 then calls the respective API on the SBxD 108. This API prepares the hardware token sharing request by including necessary parameters such as the vehicle ID, sharing ID, entitlements, activation options, sharing type, SPAKE2+ password - if not provided by the fleet management/service provider server 105, and hardware instance CA certificate (S503). The response from this API call generates a SELECT command.

The SELECT command is then forwarded from the SBxD 108 through the FMS/SPS 105 to the application/terminal 104 (S504). The communication between the application/terminal 104 and the hardware token 200 may be via NFC or otherwise. A secure channel is established, e.g. by the SPAKE2+ protocol, between the hardware token 200 and the application/terminal 104 acting as a relay to the fleet management/service provider server 105 (S505). The application/terminal relays the SELECT command to the hardware token 200, identifying the hardware token management applet AID (S506). The hardware token responds with relevant data, including version information and scrypt parameters (S507).

Next, the application or terminal communicates additional APDU payloads to the fleet management/service provider server (S508) and the SBxD 108 (S509).

The SBxD 108 generates a SPAKE2+ REQUEST command by calculating SPAKE2+ parameters, which include deriving w0 and w1 from the password and Scrypt configurations (S510). The command is sent to the fleet management/service provider server 105 and used for establishing a secure connection to the hardware token 200 (S511).

Once the SPAKE2+ exchange is complete, the SBxD 108 compiles the endpoint creation data, which outlines the configuration for the new endpoint on the hardware token 200. The SBxD 108 as the sharer device sends the endpoint configuration using the WRITE BUFFER command to the hardware token 200 (S521). Once all required data has been transmitted, the SBxD 108 initiates the processing of this data by issuing the CREATE HARDWARE TOKEN ENDPOINT command (S522). The hardware token 200 reads the data from the buffer, verifies the configuration, creates the endpoint, and generates the corresponding certificates (S523). The newly created endpoint is set to an inactive state, i.e. that it does not allow fast or standard transactions until the token sharing process is finalized. A corresponding response is sent to the SBxD 108 (S524). The SBxD 108 subsequently reads the generated certificates from the hardware token 200 (S525, S526). The certificates are buffered on the sharer device, i.e. the SBxD 108.

To continue, the sharer device requests the creation of an encryption key on the hardware token 200 by sending the CREATE ENCRYPTION KEY command (S527). The hardware token 200 generates the encryption key and creates an attestation (S528). The SBxD 108 then receives the CREATE ENCRYPTION KEY response (S529). Then, the SBxD 108 retrieves the encryption key attestation using the READ BUFFER command (Steps 530, 531). The attestation data is stored on the sharer device for subsequent use, such as in key tracking processes.

Finally, in Phase 3 (see Fig. 6) the sharing entity - i.e. the SBxD 108 -prepares an attestation package. The package comprises inter alia the public key of the endpoint certificate and is signed by the sharing entity. A key tracking and online attestation package is also prepared and comprises the aforementioned attestation package, the endpoint certificate signed by the instance CA, the instance CA certificate and the endpoint encryption key attestation signed by the endpoint private key for the newly created endpoint. This key is used for secure transfer of an optional immobilizer token into the confidential mailbox (S600). In cases where sharing originates from a device, explicit user authentication is required. When sharing is initiated by an SBxD 108, additional vehicle OEM policies, such as second-factor protection, may apply.

Once the attestation package is prepared, the sharing entity proceeds with a track key request. This request is sent to the Vehicle OEM Server 114 (S602). The purpose of this request is to retrieve the contents for the mailbox.

The Vehicle OEM Server 114 processes the request (S604), sends a track key request to the key tracking server 115 (S605) and sends a track key response containing the encrypted device data and mailbox information back to the sharing entity (S606). The sharing entity then uses its private encryption key to decrypt the received device data. The confidential mailbox data is then securely forwarded to the hardware token 200, which will decrypt it using its specific encryption key from the encryption key attestation (S608).

After successfully decrypting the data, the sharing entity writes both mailboxes to the token.

The secure SPAKE2+ channel between the sharer device, e.g. the SBxD 108, and the hardware token 200 via the NFC terminal 104 and the fleet management server/service provider ensures that all subsequent commands and data transfers are protected (S610).

In step S612, the sharer device issues a SET PRIVATE DATA command, providing the key identifier and mailbox data. The mailbox data includes relevant information such as mailbox version, signaling bitmap, etc. The hardware token 200 processes the command and responds with a success code in step S613.

Next, the sharer device initiates a WRITE BUFFER command in step S614, which transfers the encrypted confidential mailbox data to the hardware token 200. The hardware token 200 acknowledges the receipt of this data with a success code in step S615.

The sharer device issues a SET CONFIDENTIAL DATA command in step S616, including the key identifier. The hardware token 200 decrypts and stores the confidential mailbox data in step S617. The hardware token 200 confirms the success of this operation in step S618.

The sharer device issues a SETUP HARDWARE TOKEN ENDPOINT command in step S619, providing inter alia the key identifier and the key slot identifier to the hardware token 200. The hardware token 200 responds with a success code in step S620.

If a link tear down occurs any time between step S612 and S620, the sharer device may retry the failed subsequence, e.g. the WRITE BUFFER command may be repeated if the SET CONFIDENTIAL DATA command is to be repeated.

Finally, the hardware token 200 completes the endpoint setup by deleting all temporary data, such as the confidential mailbox data encryption key, sets the endpoint to active status in step S621 and notifies the sharer device with the command SETUP HARDWARE TOKEN ENDPOINT response and a success code in step S622.

Next, the sharing entity - here: SBxD 105 - issues a command to indicate to the vehicle OEM server 114 that the sharing process has been successfully completed (S624). The vehicle OEM server 114 then pushes the attestation to the vehicle 110 (S626).

The vehicle OEM server 114 server sends a message to the SBxD 108 to inform it of the hardware token 200 and of the completed sharing process (S628). Finally, the SBxD 108 sends a message to the fleet management/service provider server 105, confirming that the token sharing flow is fully complete and all processes are finalized (S630).

Any additional vehicle OEM policies for secure data handling and second-factor authentication are applied as required for the fleet/service context.

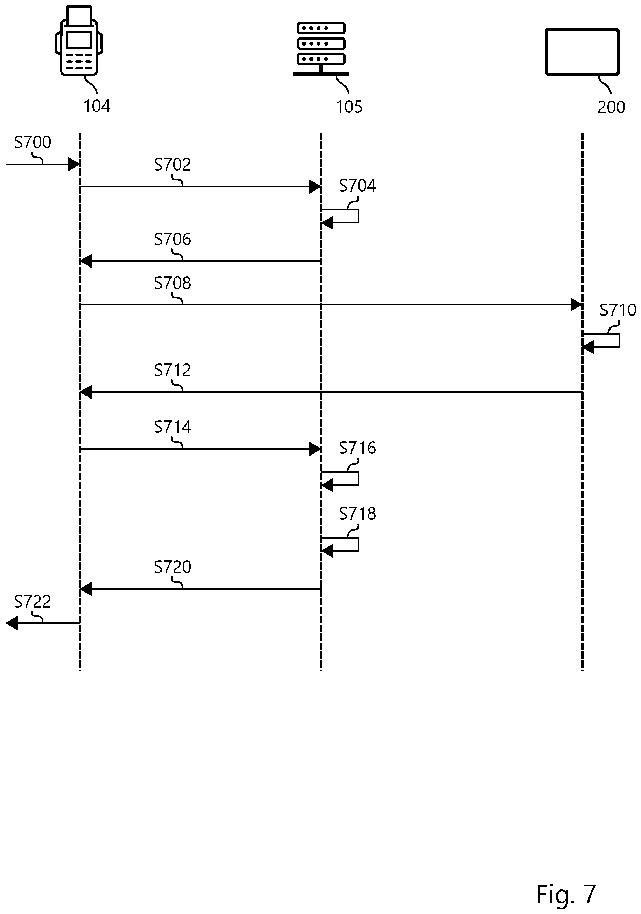

Fig. 7 illustrates an embodiment of a method for binding a hardware token 200.

The binding is initiated by a terminal ("binding device") 104, which could be a PC with an NFC reader or the like (S700). A backend entity ("binding entity") would then be instructed by the binding device 104 to execute the binding process. The backend entity could be a SBxD 104 or a FMS/SPS 105. The binding device 104 requests (S702) in the embodiment of Fig. 7 a binding challenge from the fleet management/service provider server 105, which will be used to ensure secure and unique binding. The fleet management/service provider server 105 generates the binding challenge, serving as a unique identifier for the binding session (S704), and returns it to the binding device 104, allowing the process to continue (S706).

The binding device 104 then sends an INSTANCE CA BINDING request to the hardware token 200 which contains the binding challenge (S708) obtained from the backend entity 105/108 and the reference of the instance CA key that shall perform the signing. The hardware token 200 compiles a set of data which contains the binding challenge and may contain further data such as a locally generated random value, a reference of the signing key, and/or a constant reflecting that the set of data is related to an instance CA binding. The hardware token 200 then signs the set of data with the private key (SK) of the requested instance CA (S710). The hardware token 200 responds with the INSTANCE CA BINDING response, returning the signature (S712). The response may contain additional data such as the locally generated random value, a reference of the signing key, and/or a constant reflecting that the set of data is related to an instance CA binding.

The binding device 104 forwards the Instance CA certificate and signature to the fleet management/service provider server 105 for verification (S714). The fleet management/service provider server 105 then verifies the validity of the instance CA certificate and checks the correctness of the signature, confirming the authenticity of the hardware token (S716). Upon successful verification, the server stores the instance CA certificate for fleet or service use (S718). Accordingly, the corresponding hardware token 200 would then be on a "whitelist", i.e. the hardware token 200 is now added to a pool of hardware tokens that can be used as a sharing target for digital keys that relate to the binding entity, whereas no unbound hardware token may be a recipient for a digital key related to a binding entity.

The server then confirms the binding to the binding device, indicating that the token binding was completed successfully (S720). Finally, the binding device concludes the token binding process, marking the end of the method (S722).

As already mentioned, the binding entity may also be the SBxD 108, .i.e. the steps 704/716/718 may be performed by the SBxD 108 and the FMS/SPS 105 will then act as proxy between the terminal 104 and the SBxD 108.

In addition, before the binding process a secure communication channel could be established between the binding entity 105/108 and the hardware token 200 by using a provided password. The channel could be used by the binding entity 105/108 to confirm that the hardware token 200 is technically useable.

Further, it is important that a digital key sharing process can continue even in the event of temporary disruptions of the underlying secure communication channel.

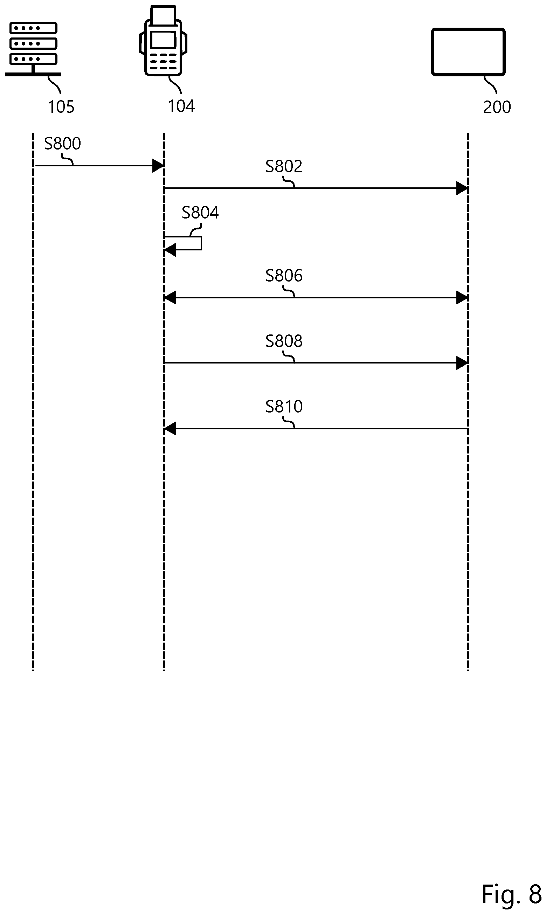

Fig. 8 illustrates in an embodiment a process for handling connection losses in key sharing. The method for handling connection loss between a hardware token and a reader device 104 begins with the start of the key-sharing process. The sharing of the digital key is initiated (S800), for example, through a smart device's wallet or another sharer device, e.g. a fleet management/service provider server 105, which pushes the key-sharing command via the reader device 104 to the hardware token 200 (S802). Initial data such as session identifiers and cryptographic keys for secure communication are generated and may be stored in a non-volatile memory (NVM) of the hardware token 200 to prepare for potential interruptions.

Once the process is initiated, the reader device detects when communication with the hardware token 200 is lost during the key-sharing process (S804). Upon identifying a loss of connection, the reader initiates a retry mechanism to restore communication with the hardware token 200 (S806) attempting to re-establish the connection with the hardware token 200. This mechanism is designed to automatically handle transient communication issues and allows the system to continue the key-sharing process as soon as communication is restored. To ensure continuity, the system stores the state of the current command sequence, including the point of interruption, in the NVM. This information allows the reader device 104 to know exactly where to resume once communication is restored.

Following the re-establishment of the communication (S808), the reader device 104 attempts to resume the key-sharing process by re-sending the subset of commands that failed at the last successful step. The reader device 104 retrieves the previously saved command state from the NVM, allowing it to continue from the point of interruption. This process enables the system to continue from the point of interruption, ensuring that the key-sharing process completes without the need to repeat unnecessary commands (S810). The retry count and timing data may also be saved in the NVM to track the number of retries and apply exponential backoff if needed.

To ensure robust security, retry attempts are limited to a predefined time window. Communication between the hardware token and the reader device uses a secure protocol, such as SPAKE2+, ensuring data integrity and confidentiality throughout the transmission. Restricting retry attempts to a specific time window prevents endless retries that could cause inefficiencies and delays, DoS or brute force attacks.

To further protect against brute-force attacks, the retry mechanism may use an exponential backoff delay between subsequent retry attempts. With each failed attempt, the delay before the next attempt increases, making rapid retries impossible. This exponential delay is reset after a successful reconnection and authentication, ensuring that access can resume promptly when the connection is re-established.

For cases of persistent connection issues, the reader device 104 logs each retry attempt and may generate error reports. These logs provide valuable diagnostic data for system administrators, enabling them to troubleshoot and address ongoing connectivity problems.

Finally, essential data related to the key-sharing process is stored in the non-volatile memory of the hardware token 200. The reader device 104 is normally stateless and just forwards commands and their responses. The sharing entity must perform the retry, e.g. the smart phone in the private sharing use case or the SBxD 108 needs to repeat a step. In both cases the use of non-volatile memory may not be necessary as data may be kept in an open key sharing session.

In general, the storage ensures that critical information is preserved even in the event of a temporary power loss. By retaining this data, the system can resume the key-sharing process without losing progress.

Not all of the mentioned information necessarily needs to be stored in non-volatile memory (NVM). In many cases, it may be sufficient to save a limited set of critical data to resume the process after a disruption. The focus is mainly the hardware token 200 itself to handle situations like power loss in the case of a key card and a communication loss, which may happen to any kind of hardware token 200.

The endpoint of the hardware token 200 may not be usable when not set active. The endpoint is set to active when the key learning sequence is fully complete. This may lead to a deletion of all key learning session information, which are persistently stored and data in RAM, e.g. of the essential cryptographic keys (confidential mailbox encryption key), etc.

Typically, only the following key information would be stored in the NVM:
- Timing and Retry Counters: The current state of the retry timer and the number of retry attempts already made;
- Essential Cryptographic Keys: If cryptographic keys are necessary for secure communication and need to be temporarily saved, they could be stored in NVM to support secure session recovery;
- Session IDs or Other Identifiers: These can help maintain the context of the ongoing operation.

## Claims

1. A method for initializing a hardware token for sharing of a digital key in a digital access system for a vehicle, comprising:
providing on the hardware token
- a hardware token management applet,
- a hardware token instance CA comprising a hardware token instance CA certificate,
wherein the instance CA certificate is issued by a device CA.

2. The method of claim 1, wherein the hardware token instance CA certificate is cross-signed by:
- a Vehicle OEM CA, in the case of a hardware token specific to a Vehicle OEM, and/or
- a global CA, in the case of a universally usable hardware token, and/or
- a proxy CA acting as a proxy for several vehicle OEMs.

3. The method of claim 2, wherein the proxy is a system, software, or other hardware token that acts as an intermediary between the hardware token and multiple vehicle OEM systems.

4. The method of claim 2, wherein the proxy is responsible for managing certificates for multiple OEMs.

5. The method of claim 2, wherein the proxy system stores and/or manages authentication certificates for different OEMs.

6. The method of claim 1, wherein the hardware token comprises secret and parameters for deriving a secret of a password.

7. A system for carrying out the method of one of the claims 1-6, the system comprising securely sharing a digital vehicle access key, the system comprising a server and/or a backend system and a hardware token.

8. A hardware token for the system of claim 7.
